# EUROPEAN PATENT SPECIFICATION

(11) **EP 4 552 473 B1**
(45) Date of publication and mention of the grant of the patent: **23.09.2026**
(21) Application number: 23209271.8
(22) Date of filing: 10.11.2023
(51) Int. Cl.: A01F 12/44

(54) **A SIEVE ASSEMBLY**
SIEBANORDNUNG
ENSEMBLE TAMIS

(43) Date of publication of application: 14.05.2025
(73) Proprietor: CNH Industrial Belgium N.V., 8210 Zedelgem (BE); CNH Industrial America LLC, New Holland, PA 17557 (US)
(72) Inventor: DUQUESNE, Frank, 8210 Zedelgem (BE); HILLEN, Curtis, New Holland, 17557 (US); VANDERSTICHELE, Michiel, 8210 Zedelgem (BE); VANHEE, Kris, 8210 Zedelgem (BE)
(74) Representative: CNH Industrial IP Department

(56) References cited:
- US-A- 4 355 647
- US-A1- 2005 282 601
- US-A1- 2015 087 366
- US-A1- 2023 020 643
- US-B2- 10 398 085
- US-B2- 10 757 863

## Description

### Field of the Invention

The present invention is related to agricultural machinery, in particular to improvements applicable primarily though not exclusively in the cleaning section of a combine harvester.

### State of the art.

Combine harvesters, such as for example described in US 4 355 647 A, comprise a sieve assembly in the harvester's cleaning section, which is the area of the combine where grain kernels are separated from crop residue material. The sieve assembly usually comprises a grain pan and one or more sieves mounted in a rectangular frame sometimes referred to as a cleaning shoe. The grain pan and the sieves are subjected to a fore-aft shaking movement, possibly with a sideshaking movement superimposed thereon. The fore-aft movement is actuated by a drive mechanism that drives a rocking movement of support arms coupled laterally to the grain pan and the sieves. Several sets of these rocking arms are included to enable a phase difference between the fore-aft movements of different components, notably between the movement of the grain pan and the movement of one or more of the sieves.

The connections between the sieves and the grain pan on the one hand and the respective rocking arms on the other hand are subject to high forces as a consequence of the shaking movements actuated by the drive mechanism. These connections are therefore often realized as conical connections between matching and coaxial conical surfaces, which enables high strength combined with little or no clearances between the interlocked connection parts.

A problem with current conical connections applied in this context however is that the connections are often designed so that they need to be secured or released from the interior of the cleaning section, for example by bolts inserted into the connections from the area of the sieves or grain pan towards the rocking arms. Access to the connections in this way is often difficult which makes the replacement and maintenance of these connections a time-consuming effort.

This problem may be worsened by the fact that that these connections can be quite difficult to separate because of the high friction forces between the conical surfaces.

### Summary of the invention

The invention is related to a sieve assembly and related methods as described in the appended claims. The present invention is thus related to a sieve assembly comprising one or more planar components including one or more sieves, supported by rocking arms configured to actuate a fore-aft rocking movement to the components. At least one of the rocking arms is connected to one of the components by a conical connection comprising a first and second connection piece having matching conical surfaces. The conical connection can be secured and released from the side of the rocking arm. To this aim, the first connection piece is rotatably mounted in an opening of the rocking arm, and a securing bolt passes through said opening and through the first connection piece, and is screwed into the second connection piece, the latter being fixed to or uniform with the planar component. The first connection piece is furthermore provided with a thread portion at the side of the rocking arm, enabling to insert a pin into the first piece, and screw an auxiliary bolt into said thread portion after the removal of the securing bolt, to thereby force the conical surfaces apart.

### Brief description of the figures

Figure 1 is a conceptual side view of a combine harvester as known in the prior art.
Figure 2 shows the grain pan of a sieve assembly in accordance with an embodiment of the invention, including four rocking arms coupled to the grain pan.
Figure 3 illustrates a conical connection in accordance with one embodiment of the invention.
Figure 4 is an enlarged view of the conical connection of Figure 3, in the secured state.
Figure 5 illustrates a method of releasing the conical connection of Figure 3.
Figure 6 illustrates another embodiment of a conical connection according to the invention.

### Detailed description of preferred embodiments of the invention

Preferred embodiments will now be described with reference to the drawings. The detailed description is not limiting the scope of the invention, which is defined only by the appended claims.

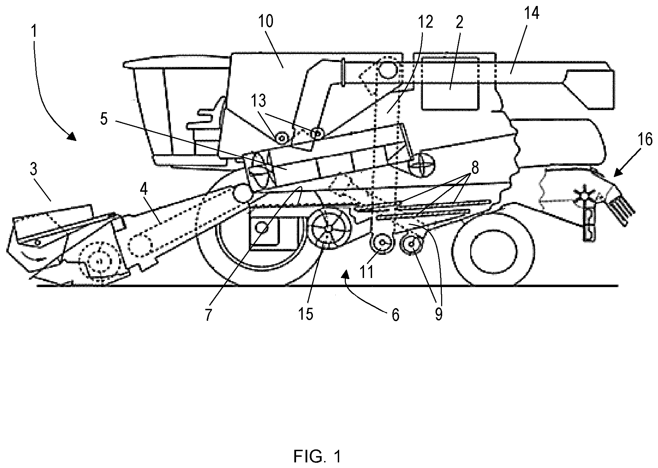

With reference to Figure 1, a combine harvester 1 as presently known in the art includes an engine 2, a header 3 for cutting crops from the field, and for gathering the crops towards the inlet of a feeder 4. The feeder delivers the crops to one or two threshing rotors 5 which separate larger crop material from grains and smaller residue. Longitudinally mounted threshing rotors may be applied as shown in the drawing, but transversely mounted rotors are equally possible.

The cleaning section 6 of the harvester includes a sieve assembly comprising a grain pan 7 and a plurality of sieves 8 for separating grains from the smaller residue. Insufficiently separated crop material, also called tailings, is transported back to cleaning, possibly after rethreshing, by the tailings auger 9. Fully separated grains are collected in a grain tank 10 through the combined action of a clean grain auger 11 and a grain elevator 12. From the tank 10, the grains may be evacuated from the harvester through further augers 13 at the bottom of the grain tank and through a pivotable spout 14. Small crop residue, also referred to as chaff, is blown towards the rear of the harvester by a blower 15. Larger crop residue such as crop stalks and leaves is moved to a chopper and spreader assembly 16, where it may be cut into smaller particles and spread out across a wide swath behind the advancing combine.

As stated in the introduction, the grain pan 7 and the sieves 8 are coupled to a drive mechanism, not shown in Figure 1 but known as such, configured to actuate fore-aft shaking movements to the components of the sieve assembly. Typically, the grain pan 7 is configured to shake in counterphase relative to one or more of the sieves 8.

The invention is not limited to the particular configuration shown in Figure 1 which is intended only to sketch the context to which the invention is applicable. The invention is in fact applicable to any sieve assembly including fore-aft moving cleaning components.

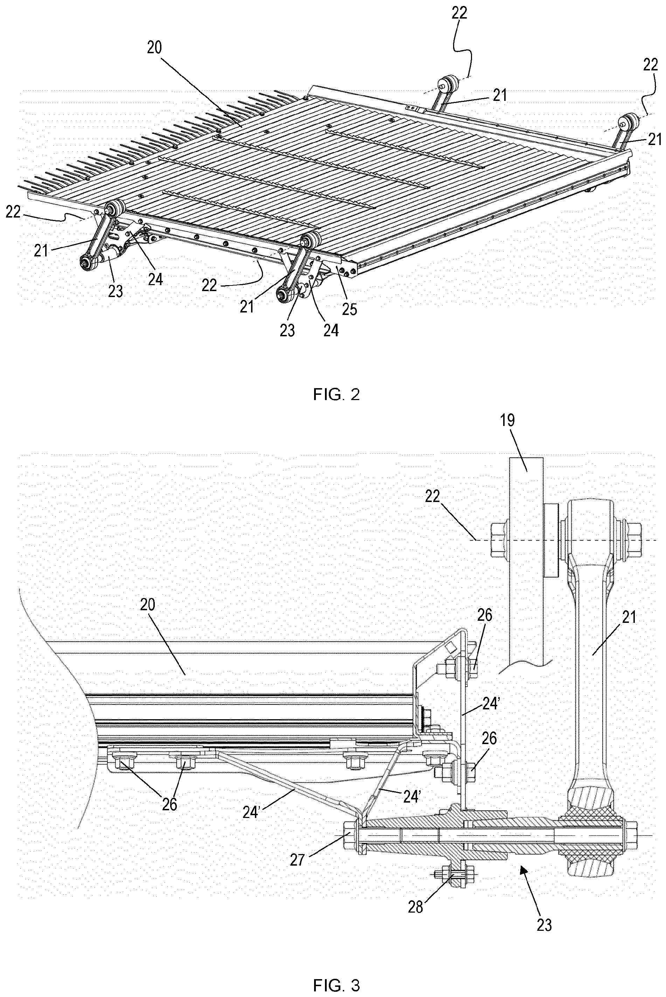

Figure 2 shows a grain pan 20 of a sieve assembly in accordance with an embodiment of the invention. The pan is supported by four rocking arms 21 which are pivotably coupled at one end to a support structure (not shown) so as to be pivotable about respective pivot axes 22. At their other end, the rocking arms 21 are connected to the grain pan 20 by lateral connections 23 between the arms 21 and support brackets 24 which support the frame 25 of the grain pan 20. A drive mechanism, not shown but known generally in the art, actuates a rocking movement of the arms 21 about their pivot axes 22, to thereby shake the pan forward and backward in order to advance grains and other crop material towards the sieves (not shown) mounted downstream of the grain pan 20.

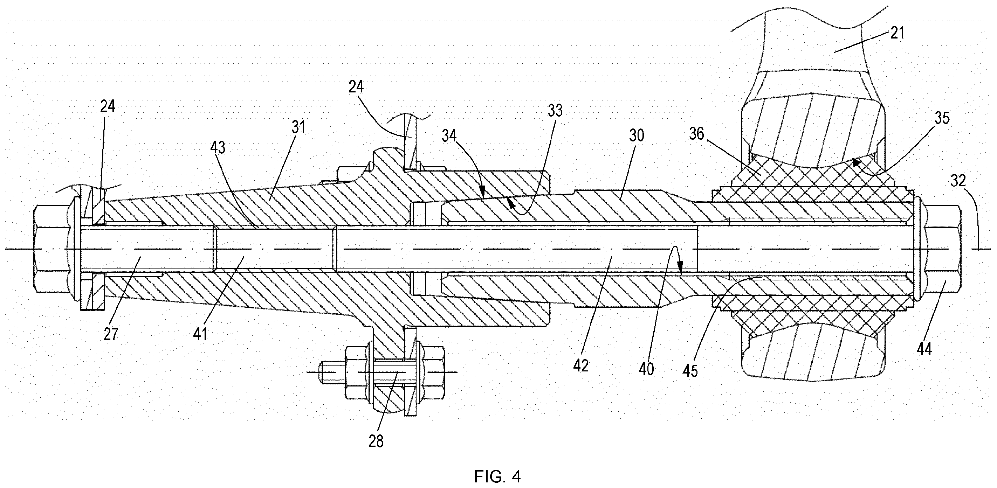

Figure 3 shows a side view of one of the rocking arms 21 and part of the grain pan 20. The support structure 19 is partially shown, as well as the pivot axis 22 at one end of the rocking arm 21 where the arm is pivotably mounted on said support structure 19. It is seen that the support bracket 24 is formed of different plate elements 24' attached to the frame 25 by bolt connections 26. This is just one example of a possible support bracket and the invention is not limited by this example. The lateral connection 23 is shown in cross-section view in Figure 3. This view is represented in enlarged format in Figure 4. This lateral connection 23 is a conical connection in accordance with an embodiment of the invention. The connection is applicable between a rocking arm 21 and the grain pan 20 as well as between a rocking arm and a sieve.

The connection 23 comprises a first connection piece 30 and a second connection piece 31 aligned along a common longitudinal axis 32, and having matching conical surfaces 33 and 34 coaxially arranged about said axis 32. In the embodiment shown, the first piece 30 comprises an external (convex) conical surface 33 while the second piece 31 comprises an internal (concave) conical surface, but the inverse is also possible.

The first connection piece 30 is rotatably mounted in an opening 35 provided in the rocking arm 21 at the opposite end of said arm relative to the pivot axis 22. A rotary bearing 36 is mounted between the first piece 30 and said opening 35 in the rocking arm 21, enabling the rotation of the first piece 30 relative to the arm 21 about the central axis 32. The bearing 36 is preferably a flexible bearing, enabling a degree of additional movement (besides the rotation about axis 32) of the first connection piece 30 relative to the arm 21, such as a limited deviation of the connection piece 30 from the represented perpendicular orientation relative to the arm 21. This may be required for example, if a side-shaking movement of the grain pan or a sieve is superimposed on the fore-aft shaking movement.

The second connection piece 31 is fixed to the support bracket 24 by bolt connections 27 and 28. According to other embodiments, an example of which will be given later, the second piece can be fixed to said bracket by other means, or it could be uniform with a support bracket or even with the grain pan as such.

The first and second pieces 30 and 31 comprise respective longitudinal internal openings 40 and 41, coaxially arranged about the longitudinal axis 32 and aligned to each other. The opening 40 in the first connection piece 30 passes completely through said piece 30 from the side of the rocking arm 21 to the opposite side.

A threaded securing bolt 42 passes through the opening 35 in the rocking arm 21 and through the internal opening 40 in the first connection piece 30, and is screwed into the second piece 31. To this aim, the opening 41 of the second piece 31 is provided with an internal thread 43 matching the external thread of the securing bolt 42. By tightening the head 44 of the bolt 42 against the outer end of the first connection piece 30 at the side of the rocking arm 21, the conical surfaces 33 and 34 are forced into close mutual contact, thereby securing the connection.

As seen in Figure 4, the internal opening 40 of the first connection piece 30 comprises an internal thread portion 45 at the end of the first piece 30 that is inserted in the opening 35 of the rocking arm 21. The internal diameter of this thread portion 45 is larger than the external diameter of the securing bolt 42 so that the securing bolt 42 does not interact with this thread portion 45. The securing bolt 42 is freely insertable in the opening 40 and interlocks only with the internal thread 43 of the second connection piece 31.

The function of the additional thread portion 45 is related to the separation of the connection pieces 30 and 31 from each other. According to a preferred embodiment, the method for separating the connection pieces comprises the following steps. First the securing bolt 42 is removed by unscrewing it from the opening 41 in the second connection piece 31. At this point however, the pieces remain interlocked by the friction force between the conical surfaces 33 and 34.

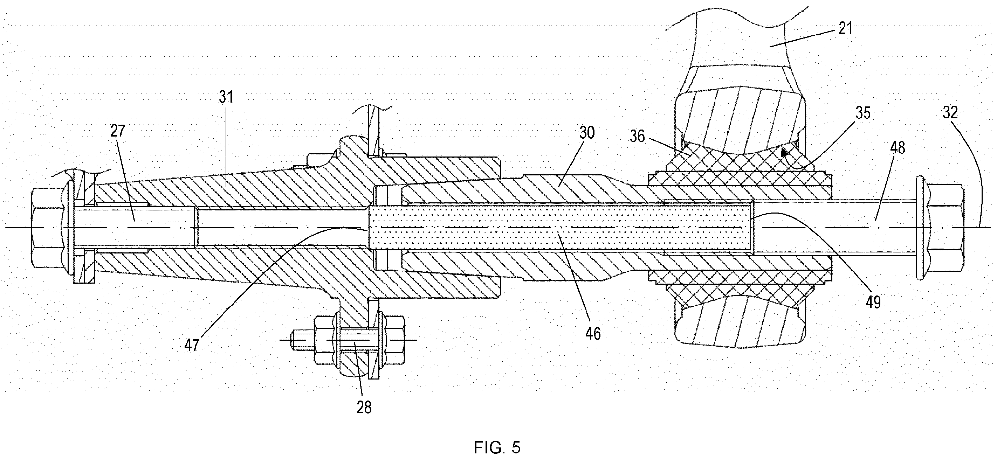

As illustrated in Figure 5, a pin 46 is then inserted in the opening 40, from the right-hand side as seen in the drawing, i.e. through the opening 35 in the rocking arm 21. The diameter of the pin 46 is larger than the outer diameter of the securing bolt 42 but smaller than the diameter of the opening 40. The pin 46 is thus freely insertable in the opening 40 in the first piece 30 but not in the opening 41 in the second piece 31, i.e. the distal face 47 of the pin 46 is blocked by the entrance to the opening 41, as illustrated in Figure 5. The length of the pin 46 is such that when the distal face 47 contacts the second piece 31, the proximal face 49 lies between the entrance to the opening 40 and the depth of the thread portion 45.

An auxiliary threaded bolt 48 is now used, having a thread that matches the internal thread portion 45. The auxiliary bolt 48 is screwed into said thread portion 45, until it contacts the proximal face 49 of the pin 46. By continuing to turn the head of the auxiliary bolt 48, the connection pieces 30 and 31 are forced apart.

The advantage over existing conical connections applied for supporting components of a sieve assembly is that the connection is easily accessible from the side of the assembly. Securing and releasing the connection is therefore easier than in existing configurations.

In the embodiment illustrated in Figures 3 to 5, the internal opening 41 in the second connection piece 31 passes from one side of said second piece 31, where the bolt 42 is screwed into the opening 41, to the opposite side. The bolt 27 by which the second piece 31 is fixed to the support bracket 24 is screwed into the opening 41 from said other side. This configuration enables to access said opening 41 from said other side by unscrewing the bolt 27. Because of this possibility, the separation of the connection pieces 30 and 31 can also be done by screwing the auxiliary bolt 48 into opening 40 from the side of the arm 21, inserting a pin from the other side, and by impacting said pin from said other side. This is however a less preferred release method, as it requires to access the connection from the interior of the sieve assembly, which is usually more difficult to do. The release method described above is therefore preferred, and this method is applicable regardless of whether or not the opening 41 is accessible from the interior of the sieve assembly.

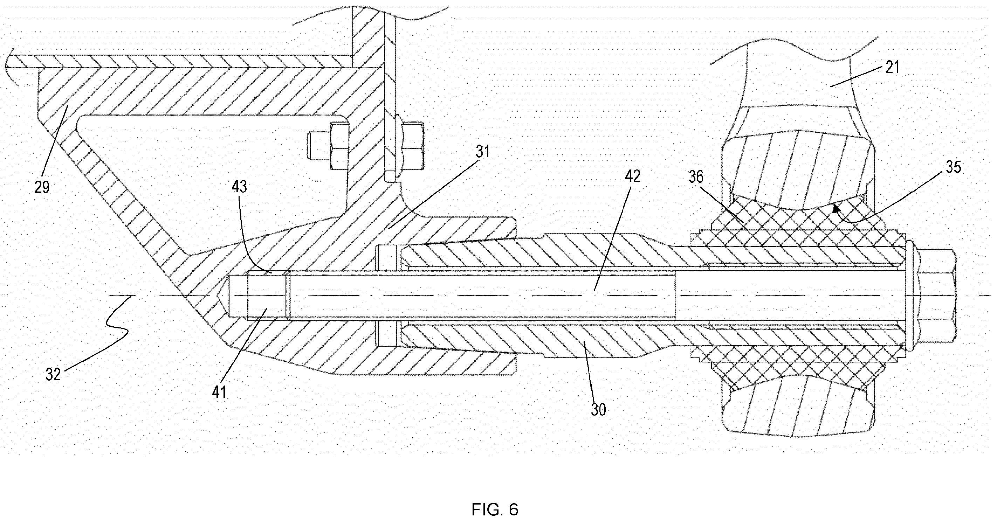

Figure 6 illustrates another embodiment. The first connection piece 30 is the same as in the first embodiment. The second connection piece 31 is now uniform with support bracket 29. The opening 41 is now a blind hole and cannot be accessed from the interior of the sieve assembly. The above-described release method illustrated in Figure 5 is however applicable for separating the connection pieces 30 and 31 of the embodiment of Figure 6.

In a sieve assembly according to the invention, the lateral connections between a set of rocking arms and a component of the assembly supported by said arms may be in accordance with any of the above-described embodiments, whether said component is a grain pan or a sieve. However, not necessarily all the connections are in accordance with the invention. For example, only the connections which require regular replacement or maintenance could be in accordance with the invention, while others are in accordance with any prior art design. A sieve assembly according to the invention is therefore characterized by the presence of at least one conical connection as described above and in the appended claims.

A sieve assembly according to the invention is applicable by itself, for example as a stationary sieve assembly, or incorporated in a combine harvester. The invention is equally related to a combine harvester comprising a sieve assembly in accordance with the invention.

## Claims

1. A sieve assembly comprising a support structure (19), one or more planar components (20) including one or more sieves, a plurality of rocking arms (21) for carrying the planar components, the rocking arms being mounted laterally with respect to the planar components, and further comprising an actuating mechanism configured to actuate a rocking movement of the rocking arms and hence of the planar components relative to the support structure, wherein at least one of the rocking arms (21) is connected to one of the planar components (20) by a conical connection (23) comprising a first and second connection piece (30,31) aligned along a common longitudinal axis (32) oriented transversely with respect to the rocking arm (21), said connection pieces being provided with matching conical surfaces (33,34), the first connection piece (30) being rotatably mounted in an opening (35) provided in the rocking arm (21), the second connection piece (31) being fixed to or uniform with the planar component (20), **characterized in that** :
- the connection (23) is secured by a securing bolt (42) inserted through the opening (35) in the rocking arm (21) and through the first connection piece (30) and screwed into the second connection piece (31), thereby forcing said matching conical surfaces (33,34) into close mutual contact,
- the first connection piece (30) comprises an internal thread portion (45) accessible through the opening (35) in the rocking arm (21), said internal thread portion being larger in diameter than the diameter of the securing bolt (42), so that said securing bolt does not interact with the internal thread portion (45), said internal thread portion (45) enabling to screw an auxiliary bolt (45) into the first connection piece (30) when the securing bolt (42) is removed.

2. The assembly according to claim 1 wherein the sieve assembly is a sieve assembly of a combine harvester, and wherein the planar components comprise a grain pan (20) and one or more sieves.

3. The assembly according to claim 1 or 2, wherein the second connection piece (31) comprises an opening (41) coaxially arranged about said longitudinal axis (32) and passing through the second connection piece (31), and wherein the securing bolt (42) is screwed into said opening (41) at one side of the second connection piece (31) and wherein the second connection piece is releasably fixed to a support bracket (24) that carries the planar component (20), at least by a bolt (27) screwed into said opening (41) at the other side thereof.

4. The assembly according to claim 1 or 2, wherein the second connection piece (31) is uniform with a support bracket (29) that carries the planar component (20).

5. The assembly according to claim 1, 2 or 4, wherein the second connection piece (31) comprises a blind hole (41) open to one side with the securing bolt (42) screwed into said blind hole.

6. A method for releasing a connection between a rocking arm (21) and a planar component (20) in a sieve assembly according to any one of the preceding claims, the method comprising the steps of :
- unscrewing and removing the securing bolt (42),
- inserting a pin (46) having a proximal end (49) and a distal end (47) through the opening (35) in the rocking arm and through the first connection piece (30), said pin being freely insertable through the first connection piece (30) but not through the second connection piece (31) so that the distal end (47) of the pin is blocked by the second connection piece (31),
- screwing an auxiliary bolt (48) into the internal thread portion (45) of the first connection piece (30), until said auxiliary bolt contacts the proximal end (49) of the pin,
- continuing to screw the auxiliary bolt (48) into said internal thread portion (45), thereby forcing the conical surfaces (33,34) apart.

## Patentansprüche

1. Siebanordnung, umfassend eine Stützstruktur (19), eine oder mehrere planare Komponenten (20), die ein oder mehrere Siebe einschließen, eine Vielzahl von Schwingarmen (21) zum Tragen der planaren Komponenten, wobei die Schwingarme seitlich in Bezug auf die planaren Komponenten montiert sind, und ferner umfassend einen Betätigungsmechanismus, der konfiguriert ist, um eine Schwingbewegung der Schwingarme und somit der planaren Komponenten relativ zu der Stützstruktur zu betätigen, wobei mindestens einer der Schwingarme (21) mit einer der planaren Komponenten (20) durch eine konische Verbindung (23) verbunden ist, die ein erstes und ein zweites Verbindungsstück (30, 31) umfasst, die entlang einer gemeinsamen Längsachse (32) ausgerichtet sind, die quer in Bezug auf den Schwingarm (21) orientiert ist, wobei die Verbindungsstücke mit passenden konischen Flächen (33, 34) bereitgestellt sind, wobei das erste Verbindungsstück (30) drehbar in einer in dem Schwingarm (21) bereitgestellten Öffnung (35) gelagert ist, wobei das zweite Verbindungsstück (31) an der planaren Komponente (20) befestigt oder einstückig mit dieser ausgebildet ist, **dadurch gekennzeichnet, dass:**
- die Verbindung (23) durch einen Sicherungsbolzen (42) gesichert ist, der durch die Öffnung (35) in dem Schwingarm (21) und durch das erste Verbindungsstück (30) eingesetzt und in das zweite Verbindungsstück (31) eingeschraubt ist, wodurch die zusammenpassenden konischen Flächen (33, 34) in engen gegenseitigen Kontakt gedrückt werden,
- das erste Verbindungsstück (30) einen Innengewindeabschnitt (45) umfasst, der durch die Öffnung (35) in dem Schwingarm (21) zugänglich ist, wobei der Innengewindeabschnitt im Durchmesser größer als der Durchmesser des Sicherungsbolzens (42) ist, sodass der Sicherungsbolzen nicht mit dem Innengewindeabschnitt (45) zusammenwirkt, wobei der Innengewindeabschnitt (45) es ermöglicht, einen Hilfsbolzen (45) in das erste Verbindungsstück (30) zu schrauben, wenn der Sicherungsbolzen (42) entfernt ist.

2. Anordnung nach Anspruch 1, wobei die Siebanordnung eine Siebanordnung eines Mähdreschers ist und wobei die planaren Komponenten eine Körnerpfanne (20) und ein oder mehrere Siebe umfassen.

3. Anordnung nach Anspruch 1 oder 2, wobei das zweite Verbindungsstück (31) eine Öffnung (41) umfasst, die koaxial um die Längsachse (32) angeordnet ist und durch das zweite Verbindungsstück (31) verläuft, und wobei der Sicherungsbolzen (42) an einer Seite des zweiten Verbindungsstücks (31) in die Öffnung (41) geschraubt ist und wobei das zweite Verbindungsstück lösbar an einer Halterung (24) befestigt ist, die die planare Komponente (20) trägt, zumindest durch einen Bolzen (27), der an deren anderer Seite davon in die Öffnung (41) geschraubt ist.

4. Anordnung nach Anspruch 1 oder 2, wobei das zweite Verbindungsstück (31) einstückig mit einer Halterung (29) ausgebildet ist, die die planare Komponente (20) trägt.

5. Anordnung nach Anspruch 1, 2 oder 4, wobei das zweite Verbindungsstück (31) ein zu einer Seite offenes Sackloch (41) umfasst, wobei der Sicherungsbolzen (42) in das Sackloch eingeschraubt ist.

6. Verfahren zum Lösen einer Verbindung zwischen einem Schwingarm (21) und einer planaren Komponente (20) in einer Siebanordnung nach einem der vorstehenden Ansprüche, wobei das Verfahren die Schritte umfasst:
- Abschrauben und Entfernen des Sicherungsbolzens (42),
- Einführen eines Stifts (46) mit einem proximalen Ende (49) und einem distalen Ende (47) durch die Öffnung (35) in dem Schwingarm und durch das erste Verbindungsstück (30), wobei der Stift frei durch das erste Verbindungsstück (30), aber nicht durch das zweite Verbindungsstück (31) einführbar ist, sodass das distale Ende (47) des Stifts durch das zweite Verbindungsstück (31) blockiert wird,
- Einschrauben eines Hilfsbolzens (48) in den Innengewindeabschnitt (45) des ersten Verbindungsstücks (30), bis der Hilfsbolzen das proximale Ende (49) des Stifts berührt,
- Fortführen des Einschraubens des Hilfsbolzens (48) in den Innengewindeabschnitt (45), wodurch die konischen Flächen (33, 34) auseinandergedrückt werden.

## Revendications

1. Ensemble tamis comprenant une structure de support (19), un ou plusieurs composants plans (20) comportant un ou plusieurs tamis, une pluralité de bras basculants (21) destinés à porter les composants plans, les bras basculants étant montés latéralement par rapport aux composants plans, et comprenant en outre un mécanisme d'actionnement conçu pour actionner un mouvement de basculement des bras basculants et donc des composants plans par rapport à la structure de support, dans lequel au moins l'un des bras basculant (21) est raccordé à l'un des composants plans (20) par un raccord conique (23) comprenant une première et une seconde pièce de raccordement (30, 31) alignées le long d'un axe longitudinal commun (32) orienté transversalement par rapport au bras basculant (21), lesdites pièces de raccordement étant pourvues de surfaces coniques correspondantes (33, 34), la première pièce de raccordement (30) étant montée de manière rotative dans une ouverture (35) prévue dans le bras basculant (21), la seconde pièce de raccordement (31) étant fixée au composant plan (20) ou uniforme avec celui-ci, **caractérisé en ce que :**
- le raccord (23) est fixé par un boulon de fixation (42) inséré à travers l'ouverture (35) du bras basculant (21) et à travers la première pièce de raccordement (30) et vissé dans la seconde pièce de raccordement (31), forçant de ce fait lesdites surfaces coniques correspondantes (33, 34) à un contact mutuel étroit,
- la première pièce de raccordement (30) comprend une partie de filetage interne (45) accessible par l'ouverture (35) dans le bras basculant (21), ladite partie de filetage interne étant d'un diamètre plus grand que le diamètre du boulon de fixation (42), de sorte que ledit boulon de fixation n'interagit pas avec la partie de filetage interne (45), ladite partie de filetage interne (45) permettant de visser un boulon auxiliaire (45) dans la première pièce de raccordement (30) lorsque le boulon de fixation (42) est retiré.

2. Ensemble selon la revendication 1, dans lequel l'ensemble tamis est un ensemble tamis d'une moissonneuse-batteuse, et dans lequel les composants plans comprennent une table à grains (20) et un ou plusieurs tamis.

3. Ensemble selon la revendication 1 ou 2, dans lequel la seconde pièce de raccordement (31) comprend une ouverture (41) agencée coaxialement autour dudit axe longitudinal (32) et traversant la seconde pièce de raccordement (31), dans lequel le boulon de fixation (42) est vissé dans ladite ouverture (41) au niveau d'un côté de la seconde pièce de raccordement (31), et dans lequel la seconde pièce de raccordement est fixée de manière amovible à une console de support (24) qui porte le composant plan (20), au moins par un boulon (27) vissé dans ladite ouverture (41) au niveau de l'autre côté de celui-ci.

4. Ensemble selon la revendication 1 ou 2, dans lequel la seconde pièce de raccordement (31) est uniforme avec une console de support (29) qui porte le composant plan (20).

5. Ensemble selon la revendication 1, 2 ou 4, dans lequel la seconde pièce de raccordement (31) comprend un trou borgne (41) ouvert d'un côté avec le boulon de fixation (42) vissé dans ledit trou borgne.

6. Procédé permettant de désengager un raccordement entre un bras basculant (21) et un composant plan (20) dans un ensemble tamis selon l'une quelconque des revendications précédentes, le procédé comprenant les étapes consistant à :
- dévisser et retirer le boulon de fixation (42),
- insérer une broche (46) ayant une extrémité proximale (49) et une extrémité distale (47) à travers l'ouverture (35) du bras basculant et à travers la première pièce de raccordement (30), ladite broche pouvant être insérée librement à travers la première pièce de raccordement (30), mais pas à travers la seconde pièce de raccordement (31) de sorte que l'extrémité distale (47) de la broche est bloquée par la seconde pièce de raccordement (31),
- visser un boulon auxiliaire (48) dans la partie de filetage interne (45) de la première pièce de raccordement (30), jusqu'à ce que ledit boulon auxiliaire entre en contact avec l'extrémité proximale (49) de la broche,
- poursuivre le vissage du boulon auxiliaire (48) dans ladite partie de filetage interne (45), forçant de ce fait les surfaces coniques (33, 34) à s'écarter.
